# EUROPEAN PATENT SPECIFICATION

(11) **EP 3 046 888 B1**
(45) Date of publication and mention of the grant of the patent: **26.06.2019**
(21) Application number: 14780777.0
(22) Date of filing: 05.09.2014
(51) Int. Cl.: C04B 28/14

(54) **LIGHT-WEIGHT GYPSUM BOARD WITH IMPROVED STRENGTH AND METHOD FOR MAKING SAME**
LEICHTE GIPSPLATTE MIT VERBESSERTER FESTIGKEIT UND VERFAHREN ZU DEREN HERSTELLUNG
PLAQUE DE PLÂTRE LÉGÈRE PRÉSENTANT UNE RÉSISTANCE AMÉLIORÉE ET SON PROCÉDÉ DE FABRICATION

(30) Priority: 17.09.2013 EP 13184746
(43) Date of publication of application: 27.07.2016
(73) Proprietor: BASF SE, 67056 Ludwigshafen am Rhein (DE)
(72) Inventor: GEHRIG, Uwe, 83368 St. Georgen (DE); DENGLER, Joachim, 83342 Tacherting (DE); SCHINABECK, Michael, 83352 Altenmarkt (DE); PICHLER, Martin, 83308 Trostberg (DE); GÄDT, Torben, 83278 Traunstein (DE); LOGES, Stephanie, 83132 Pittenhart (DE)
(86) International application number: PCT/EP2014/068927
(87) International publication number: WO 2015/039890

(56) References cited:
- DE-A1- 3 144 673
- GB-A- 1 436 650
- US-A1- 2011 054 053
- LEI L ET AL: "Synthesis, working mechanism and effectiveness of a novel cycloaliphatic superplasticizer for concrete", CEMENT AND CONCRETE RESEARCH, PERGAMON PRESS, ELMSFORD, NY, US, vol. 42, no. 1, 13 September 2011 (2011-09-13), pages 118-123, XP028105472, ISSN: 0008-8846, DOI: 10.1016/J.CEMCONRES.2011.09.003 [retrieved on 2011-09-19]
- TSUJI, A. ET AL: "Water-reducing agents for gypsum slurries", CHEMICAL ABSTRACTS, CHEMICAL ABSTRACTS SERVICE (C A S), US, vol. 118, no. 8, 22 February 1993 (1993-02-22), page 374, XP000353434, ISSN: 0009-2258 & JP H04 254453 A (KAO CORP) 9 September 1992 (1992-09-09)

## Description

### Field of Invention

Described are combinations of foaming agents, such as surfactants, with dispersants and the utility for gypsum board production. Further the invention relates to production methods for making light-weight gypsum boards with enhanced compressive strength, as well as light-weight high-strength gypsum boards as such. Further disclosed are light-weight high-strength gypsum boards made with ketone resins as dispersant in combination with surfactants.

### Background of Invention

The term "gypsum" is used colloquially for the compound calcium sulfate in its anhydrous or hydrous forms such as gypsum rock, consisting of this compound in a crystalline form, and the corresponding building material, calcium sulfate hemihydrate, dihydrate or anhydrite, as well as generally for calcium sulfate hydrate CaSO₄•xH₂O wherein x is 0 - 2, or any mixture thereof.

Specifically in the context of the following the non-hydraulic binder and building material calcium sulfate hemihydrate or anhydrite is also embraced by the term "gypsum". Calcium sulfate dihydrate is a mineral and occurs naturally in large deposits which formed when oceans evaporated during the earth's history.

Gypsum rock is mined or quarried and transported to the manufacturing facility. The manufacturer receives quarried gypsum, and crushes the large pieces before any further processing takes place. Crushed rock is then ground into a fine powder and heated to about 120-160 degrees C, driving off three-fourths of the chemically bound water in a process called calcining. Further heating of gypsum, slightly beyond 200° C produces anhydrite gypsum (CaSO₄) that when mixed with water, sets very slowly. The calcined gypsum (hemihydrate or anhydrite) CaSO₄•½H₂O or CaSO₄ are then used as the base for gypsum plaster, plaster of paris, gypsum board and other gypsum products. Products of the various calcinating procedures are alpha- and beta- hemihydrate. Beta calcium sulfate hemihydrate results from rapid heating in open units with rapid evaporation of water forming cavities in the resulting anhydrous product. Alpha-hemihydrate is obtained by dehydrating gypsum in closed autoclaves. The crystals formed in this case are dense and therefore the resulting binder requires less water for rehydrating compared to beta-hemihydrate.

In addition, calcium sulfate dihydrate is also obtained as a product or by-product in various industrial processes (synthetic gypsum) for-example flue gas desulphurization (FGD), in which sulfur dioxide is depleted from the combustion off-gases of coal-fired power plants by means of a calcium carbonate or calcium hydroxide slurry. These systems capture the sulfur dioxide by passing the gases through scrubbers that contain limestone (calcium carbonate) which absorbs and chemically combines with the sulfur dioxide to form pure calcium sulfate, or gypsum.

Synthetic gypsum may also be a by-product of phosphorous acid and hydrogen fluoride production methods. The synthetic gypsum is then transported to the gypsum board manufacturer; the production process for calcining synthetic gypsum is largely the same as with mined gypsum only no primary crushing is necessary.

However, the typical natural gypsum sources that are commercially available often contain clay mineral and other impurities of up to 20% or more that results in reduced calcium sulfate levels.

Clay is the common name for a number of fine-grained, earthy materials that become plastic when wet and are mostly composed of phyllosilicate minerals containing variable amounts of water trapped in the mineral structure. There are many types of known clay minerals. Some of the more common types are: kaolinite, illite, chlorite, vermiculite and smectite, also known as montmorillonite, the latter two have pronounced ability to adsorb water.

Chemically, clays are hydrous aluminum silicates, usually containing alkaline metals, alkaline earth metals and/or iron. The clay mineral consists of sheets of interconnected silicates combined with a second sheet-like grouping of metallic atoms, oxygen, and hydroxyl, forming a two-layer mineral as in kaolinite. Sometimes the latter sheet like structure is found sandwiched between two silica sheets, forming a three-layer mineral such as in vermiculite. Structurally, the clay minerals are composed of planes of cations, arranged in sheets, which may be tetrahedral or octahedral coordinated (with oxygen), which in turn are arranged into layers often described as 2:1 if they involve units composed of two tetrahedral and one octahedral sheet or 1:1 if they involve units of alternating tetrahedral and octahedral sheets. Additionally some 2:1 clay minerals have interlayer sites between successive 2:1 units which may be occupied by interlayer cations that are often hydrated. Clay minerals are divided by layer type, and within layer type, by groups based on charge x per formula unit (Guggenheim S. et al., Clays and Clay Minerals, 54 (6), 761-772, 2006). The charge per formula unit, x, is the net negative charge per layer, expressed as a positive number. Further subdivisions by subgroups are based on dioctahedral or trioctahedral character, and finally by species based on chemical composition e.g.
x ≈ 0: pyrophyllite-group
x ≈ 0,2 - 0,6: smectite-group e.g. montmorillonite, nontronite, saponite or hectorite
x ≈ 0,6 - 0,9: vermiculite-group
x ≈ 1.8 - 2: brittle mica-group e.g. clintonite, anandite, kinoshitalite.

Conventional dispersants for gypsum compositions typically achieve good water reduction, however and depending on their chemical structure, they are limited in their ability to retain workability over a specific time range and need to be adjusted for the specific application.

Typically the issue of extending the workability or flowability is solved by re-tempering, i.e. adding more water to the slurry or by adding further high range water reducers. The addition of more water leads to lower strength products and the increased use of additives may also hamper product quality. Additional amounts of dispersants for instance retard the crystallization of calcium sulfate dihydrate. This has negative effects on the gypsum wall board production process because the line speed of the board machine has to be slowed down due to delayed setting of the gypsum slurry resulting in a significant economical drawback. Moreover high amounts of dispersants, especially polycarboxylate ethers (PCEs), also change the morphology, i.e. shape and size of the gypsum particles, resulting in decreased board strengths.

Various types of organic compounds have been used to advantageously alter certain properties of the wet gypsum compositions. One class of compounds that can collectively be termed "superplasticizers", fluidify or plasticize wet binder compositions such as calcium sulfate hemihydrate to obtain a more fluid mixture with simultaneous lower water content. A controlled fluidity is desired, such that the gypsum slurry does not segregate and allow for controlled distribution of the gypsum slurry in plaster board manufacturing processes. Additionally the lowered binder/water ratio leads to hardened compositions having a higher compressive strength development after setting.

Conventional examples of superplasticizers for use with gypsum are melamine sulfonate - formaldehyde condensation products (MFS) and beta-naphthalene sulfonate - formaldehyde condensation products (BNS). The preparation and use of BNS is well known in the art and disclosed in EP 0 214 412 B1 and DE 2 007 603 C1. The preparation and use of MFS is also well known in the art. MFS dispersants are disclosed e.g. in DE 44 11 797 A1, DE 195 38 821 A1 and EP 0 059 353 B1.

Polycarboxylate dispersants (PCE) are commonly used with cement based binder systems and to a lesser degree with gypsum. This class of compounds (PCE) is large and it is difficult to predict how individual compounds of this dispersant class react in different media. However, the use of a two-monomer polycarboxylate dispersant in gypsum products is disclosed, e.g. in US patent application US 2006-0278127.

Many PCE's may have deleterious effects in gypsum-based products such as retardation of setting time that may cause loss in compressive strength due to stabilization of foam where used. Further the absorptive property of clay mineral is literally attractive for PCE based dispersants. A strong interaction of PCE based dispersants and porous clay minerals cause binding and sequestration of dispersant molecules, thus reducing the dispersant activity in the slurry.

In order to mask the binding sites for the dispersant it is common to provide sacrificial substances that are absorbed or adsorbed by the clay mineral instead. US 6 352 952 discloses aqueous cement containing compositions comprising ethylene oxide/propylene oxide-containing comb polymers as plasticizer in the presence of clay mineral of the smectite type. Further it is described that the clay mineral in conjunction with swelling, entraps the fluidizer. This ultimately leads to poor workability of the cement binder based mixtures. To prevent the absorption of the fluidizer it is suggested to utilize inorganic cations, organic cations, polar organic groups or clay specific dispersants. Phosphates, poly(meth)acrylates and gluconates are particularly mentioned. These compounds though cannot be utilized in gypsum compositions because of the strong setting-time retardation of the inorganic binder mixtures.

US 7,261,772 discloses a gypsum composition containing, besides water, gypsum, clay, a polyoxyalkylene comb polymer and, as a necessary ingredient, an amine compound. The amine component is required to retain the fluidizing activity of the dispersant, but the amine containing composition has the disadvantage that the volatile amines lead to strong and unpleasant odor once the gypsum composition is heated, what is typically done to drive off water in the manufacturing process of gypsum wallboards.

WO 2012/076365 discloses the use of cationic copolymers as additive in clay containing inorganic binder systems based on calcium sulfate. The cationic copolymer is utilized as a masking component and prevents adsorption of dispersant by the clay mineral present in the binder mixtures. This copolymer ideally has to be applied in addition to conventional dispersants, hence leading to an overdesigned binder composition. Moreover, clay content needs to be monitored and for varying clay contents the amount of masking component has to be adjusted accordingly. Flowability of binder mixtures will be negatively affected should the amount of added copolymer be too low. This may lead to additional steps in the manufacturing process of wallboards and together with the required additional use of copolymer in the preparation of binder slurries inevitably raises costs of the final wallboard product and hence is economically unattractive.

WO 2012/049077 discloses aqueous gypsum slurries containing phosphate based polycondensate as dispersant in combination with a further polycondensate, preferably PCE with ethylene oxide side chains. Here too, multiple additives are required to obtain a workable gypsum slurry. This technique has a slightly higher clay insensitivity compared to PCE, but is not applicable in high clay-containing slurries.

WO 2009/068899 and WO 2010/133886 disclose a gypsum formulation, typically for producing gypsum building boards, wherein the gypsum slurry contains swellable clay, a comb copolymer as fluidizer and a basic water soluble polymer having preferential affinity for clay minerals. Here too, multiple additives are required to obtain a workable gypsum slurry. Analogous to WO 2012/076365 varying clay amounts could lead to unpredictable and unfavorable flow behavior.

Dispersants are added to inorganic binder systems to increase the flowability of the suspension. However, for gypsum slurries that contain swellable clay, it is not possible to reduce the water amount without any thickening effect at low dosages. The aromatic structures of BNS or polyethyleneglycol-chains of PCE cause the formation of big agglomerates within the clay layers.

When calcined gypsum is mixed with water, the dihydrate then reforms, recrystallizes within a short time with concurrent hardening of the material.

Calcium sulfate hemihydrate is therefore an important building material used for the preparation of mortars, screeds, casting molds and particularly gypsum boards and wallboards, also termed sheetrock or drywall. Due to technical requirements, considerably varying properties are demanded of calcium sulfate binders. Particularly with regard to processing time and the time at which hardening occurs, the binders must be variably adjustable over the period of several minutes. In order to satisfy these requirements, the quality and purity of the gypsum material is crucial. The use of set-regulating additives or robust dispersants is necessary. Pure and clean gypsum, such as synthetic gypsum, is not always readily available and in many instances manufacturers have to rely on natural gypsum sources that contain impurities affecting the quality of the final product. An impurity of significance is clay and depending on the degree of clay contaminant the manufacturing of building materials may either lead to lesser quality products and/or due to the increased requirement of additive increase the costs of manufacturing.

Gypsum board is the generic name for a family of panel products that consist of a noncombustible core, composed primarily of gypsum, and a paper surfacing on the face, back and optionally along the edges. Gypsum board is the umbrella term describing one of several building materials and is also called drywall, wallboard, plasterboard, sheetrock or dryrock. All gypsum boards contain gypsum cores; however, they can be faced with a variety of different materials, including but not limited to paper, fabric, fiberglass mats and other materials.

To produce gypsum board, the calcined gypsum is mixed with water and additives to form a slurry that is fed between continuous layers of sheet, such as paper, on a board machine. The term gypsum slurry as used herein refers to pastes, mortars or grouts with a certain water content that typically contain gypsum in its various forms, fine aggregates or fillers like usually sand or limestone, in some cases setting materials selected form cement, latent cement, pozzolanes and other formulation additives to the aqueous gypsum slurry selected from retarders, accelerators, foaming or anti-foaming agents, non-shrink agents, workability agents, pigments, stabilizers, hydrophobizing agents, rheology modifiers etc. As the board moves down a conveyer line, the calcium sulfate recrystallizes or rehydrates, chemically combining with the water that was removed during calcination and reverts to its original rock state. The sheet paper becomes chemically and mechanically bonded to the core. The board is then cut to length and conveyed through dryers to remove any free moisture. Such gypsum boards are used on a large scale in the building industry in particular for interior walls, ceilings and roofs.

Of significance is the acceleration of setting in the production of gypsum slabs and the reduction of matrix material to reduce weight for ease of handling, especially of gypsum board. At present, more than 8000 million m² of gypsum board per year are produced globally. The production of gypsum board has long been known. It is described, for example, in US Patent 4,009,062. The settable gypsum slurry composed of calcium sulfate hemihydrate and water used is typically produced in a flow mixer at high speed and as explained above, applied continuously to a cardboard sheet and covered with a second piece of cardboard sheet. The two cardboard sheets are referred to as the front and back sheets. The line of boards then moves along what is called a setting belt and an almost complete conversion of the settable calcium sulfate phases to calcium sulfate dihydrate must have taken place at the end of the setting belt. After this hardening, the sheet is individualized into boards and the water still present in the boards is removed in heated multistage dryers.

In order to meet rising demand and to minimize production costs, efforts are constantly being made to improve the production process. Modern plants for fabrication of gypsum slabs can reach manufacturing rates of up to 180 meters per minute. The greatest possible exploitation of the plant capacity is possible only through the use of high-efficiency additives. The setting time of the calcium sulfate hemihydrate determines the time until the gypsum plasterboard can be cut and hence the length and the speed of the conveyor belt, and ultimately the production rate. In addition, the hydration has to be complete before the boards are exposed to high temperatures in the dryer. Otherwise, the strength potential of the binder is inadequately utilized and the risk of volume expansion arises as a result of post-hydration on ingress of moisture.

Conventionally pre-generated foam is added to gypsum slurry in the manufacturing process of gypsum boards to prepare light-weight wallboards thereby reducing the amount of gypsum and substantially reducing material costs (WO 2012/122102; US 2006/0162839). A further beneficial effect of the foamed boards is the improved ease of handling of such boards. Any known foaming agent that is readily and commercially available may be utilized either alone or in combination with other foaming agents. However, foaming agents may reduce fluidity when small bubbles are formed that tightly pack together and resist flow.

Depending on the degree of clay impurities in natural gypsum sources, some conventional dispersants loose activity and the flow properties of the gypsum slurry is hampered, thus slowing down the continuous wallboard production process. In case of gypsum slurries containing clays such as smectite and vermiculite or generally any bentonites that have the capacity to adsorb high amounts of water, the water required to provide workability of the slurry is removed from the aqueous mixture resulting in a lower spreadability of the slurry. Additionally it can be observed that considerable quantities of added dispersant is absorbed by or adsorbed to the clay minerals. As a result the dispersants are no longer available to exert their fluidizing effects on the aqueous gypsum mixtures rendering them less active. Consequently more water needs to be added to the slurry to obtain or retain adequate workability ultimately leading to higher energy consumption in the final drying process.

There is considerable economic interest in reducing the weight and hence amount of gypsum, as well as the ability to utilize clay-containing gypsum sources in gypsum board manufacturing under normal production conditions, i.e. without the need to add high amounts of fluidizers or increased amounts of water to retain adequate gypsum slurry fluidity and obtain satisfactory wallboard strength.

The condensation of symmetrical or non-symmetrical ketones having acyclic aliphatic, araliphatic and/or aromatic moieties with aldehydes in the presence of sodium sulfite resulting in ketone resins is known from DE 3 144 673 A1. The use of sodium sulfite both as alkaline catalyst and as compound that introduces acid groups allows the formation of water-soluble condensation products which are suitable, for example, as additives to inorganic binders, preferably hydraulic binders. The disclosed ketone resin condensation products present high thermostability making them useful as dispersants in conditions of increased temperature as you can find in deep well drilling for mineral oil production. A disadvantage of such condensation products, however, is that besides of lower dispersant activity compared to BNS or MFS, the ketone resins, when used as an additive to chemical products for the construction industry, for example mortar or concrete, lead to a strong reddening of the surface of the cured products.

DE- 2 341 923 A1 discloses readily water-soluble condensation products of cycloalkanones and formaldehyde, using sodium sulfite as the compound that introduces acid groups (CFS). The disclosed compounds are utilized as fluidizer for mortars with retained water/binder ratio, wherein the resulting binder mixtures are described to have low porosity and high densities: typical properties achieving higher strength values beneficial for example for screeds and/or grouts. This is most likely due to the reduction of capillary pores in the matrix and is valid for all dispersants that are able to reduce water demand of an inorganic binder and simultaneously retaining flowability.

It is known from L. Lei and J. Planck (Cement and Concrete research, 42, 118-123, 2012), that cyclohexanone resins as high molecular weight polycondensates (M_{w} > 220,000 g/mol) behave similar to BNS in hydraulic cementitious mortar and provides stable performance in the presence of clay.

WO 2012/076365 discloses copolymers and dispersants for construction material mixtures based on calcium sulfate. The copolymers are used in conjunction with dispersants to allow for the water reduction capability of the dispersing agent. Clay components are masked by the cationic copolymer so that the construction material mixture comprises properties of a clay-free material Moreover, clay content needs to be monitored and for varying clay contents the amount of masking component has to be adjusted accordingly. Flowability of binder mixtures will be negatively affected should the amount of added copolymer be too low. This may lead to additional steps in the manufacturing process of wallboards and together with the required additional use of copolymer in the preparation of binder slurries inevitably raises costs of the final wallboard product.

### Summary of Invention

Problem of the present invention is found in the provision of an improved method for the production of light-weight and high-strength plasterboards manufactured from clay containing gypsum where conventional plasticizers, such as BNS, MFS or PCE's have restricted activity.

The problem is solved by utilizing ketone resins as dispersants for improving the stability of light-weight and of clay containing gypsum wallboards, wherein the ketone resins are cyclohexanone/formaldehyde/ sulfite condensation products with molecular weights from 10 000 to 50 000 g/mol.

Surprisingly, these compounds have a pronounced clay tolerance in gypsum slurries when combined with surfactants. Gypsum slurries with clay impurities comprising the inventive condensate enables the manufacture of wall boards with inferior gypsum raw material with simultaneously reducing the amount of required additives ultimately obtaining construction material that is lighter and cheaper, but still providing the stability and quality for its use in commercial wall board production. One aspect of the invention is a mixture to be employed in conjunction with water for preparing a slurry that hydrates to form a low-weight high-strength construction compound, comprising gypsum, about 0.01 weight-% to 1.0 weight-% of ketone resin by weight gypsum and having a sufficient amount of a foam to cause the slurry to harden to a dry density of not more than 1000 kg per cubic meters.

Therefore one aspect of the invention is a gypsum containing slurry according to claim 1.

A preferred aspect of the invention is a gypsum containing slurry as described above, wherein the ketone resin is synthesized from cylcohexanone formaldehyde and sulfite as the monomers (CFS), wherein the monomer ratio I / II / III is 1 / 2 - 3 / 0.33 - 1.

A further aspect of the invention is a gypsum containing slurry comprising foam and a CFS-ketone resin as dispersant having a molecular weight between 10 000 and 40 000 g/mol, more specifically between 15 000 and 25 000 g/mol.

Further the invention relates to a gypsum containing slurry as described above, wherein the ketone resin dispersant is present in an amount from 0.01 - 1 weight-% , preferably 0.025 - 0.5 weight-% and most preferred 0.05 - 0.3 weight-% of the solid condensation product, based on the weight of gypsum.

In a preferred aspect of the invention is a gypsum containing slurry according to any of the preceding descriptions, wherein the ketone resin dispersant is in the form of a 15 - 60 weight %, preferably 25 - 50 weight % aqueous solution.

The invention relates to a gypsum containing slurry as described above wherein the gypsum comprises clay. The clay content typically is in the range from 0.0001 weight-% to 10 weight-%, based on the weight of gypsum.

A further aspect of the invention is a gypsum containing slurry as described above wherein the clay is a swellable clay, including but not limited to clays such as bentonite.

Conventionally a pre-generated foam is added to the gypsum slurry mix to decrease the weight of the resulting gypsum board. The foam is generated from a mixture of a foaming agent such as a soap or surfactant, air and water in a suitable foam generating apparatus. The pre-generated foam is mixed with the gypsum slurry and then subjected to the gypsum board.

Another aspect of the invention is a gypsum containing slurry described above wherein the surfactant further comprises a linear or branched fatty alkyl sulfate, linear or branched fatty alkyl ether sulfate, hydrotrope's or a mixture thereof. A hydrotrope is a compound that solubilizes hydrophobic compounds in aqueous solutions and can be selected for example from methanol, ethanol isopropanol, ethylene glycol, propylene glycol, polyethylene glycol, polypropylene glycol, as well as monoalkylethers of ethylene glycol and alkyl-polyglycosides and mixtures thereof.

A further aspect of the invention is a gypsum containing slurry from above wherein the foam is generated from a surfactant and is typically used in amounts ranging from about 0.03 to 0.01 parts by weight of surfactant based on the weight of gypsum. Surfactants of the present invention as described above are normally added to a foam generator in the form of an aqueous solution in which the concentration of the surfactant composition in aqueous solution is preferably in the range of 0.01% to 5%, preferably from 0.25% to 2%.

Further objects of the invention are wallboards comprised of set gypsum slurry as described above, according to claim 7. Preferably the objects of the invention are light-weight, high-strength gypsum wallboard with dry weight density of 0.45 - 1.0 kg/dm³, preferably 0.50 - 0.80 kg/dm³.

Preferred inventive objects are light-weight high-strength gypsum wallboards as described, wherein the gypsum core comprises ketone resin and the gypsum is characterized by a clay content.

A light-weight high-strength gypsum wallboard from above wherein the set gypsum core comprises ketone resin used in the raw slurry as dispersant, in the range of 0.01 - 0.5 weight-%, preferably 0.05 - 0.3 weight-% of the solid condensation product based on the weight of gypsum.

The invention further provides a method, according to claim 11, of making light-weight high strength gypsum wallboards comprising gypsum slurries as described above, wherein the gypsum contains clay and wherein the dispersant is selected from a ketone resin.

The method as provided by this invention is utilized for making light-weight high-strength gypsum wallboard, comprising the steps of preparing foam from a surfactant, separately preparing an aqueous dispersion/suspension or slurry of gypsum containing a ketone resin in the range from 0.01 - 1 weight-% based on the weight of gypsum and further mixing the foam into the aqueous dispersion/suspension or slurry of gypsum containing the ketone resin. The gypsum further contains clay in varying amounts of up to 10 weight-%. The resulting aqueous dispersion/suspension or slurry of gypsum is sandwiched between cover sheets to form wallboard, cut to desired size after the gypsum slurry has sufficiently hardened and dried. Preferably the cover sheets are of paper or reinforced paper. Another aspect of the present disclosure is a CFS-based dispersant composition that at low dosages robustly presents a water reduction potential in gypsum binder slurries independent of clay-impurities, preferably at dosages from 0.01 weight-% to 0.5 weight-% related to binder and 0.01-10 weight-% clay impurity.

### Brief description of the drawings

Fig 1: Micrographs of pore structure obtained from mixtures 2.1 and 2.2.
Fig 2: Micrograph of pore structure obtained from mixtures 3.1, 3.2, 3.3, 3.4 and 3.5
Fig 3: Water/stucco ratios for different dispersants at different dosages for clay containing natural stucco.
Fig 4: Wallboard samples 5.1 with BNS as dispersant and 5.2 with ketone resin no. 7 as dispersant
Table 1: Summary of synthesized ketone resins.
Table 2: Flow and setting time results of Example 1.
Table 3: Dry densities, flexural and compressive strengths of Example 1.
Table 4: Recipes of mixtures 3.1, 3.2, 3.3, 3.4 and 3.5 of Example 3.
Table 5: Clay robustness of inventive ketone resins of Example 6.

**Table 1:**

| Polymer | Method | Ketone | Sodium sulfite | Formaldehyde (30%) | Gallic acid | Further component | Mw [g/mol] |
|---|---|---|---|---|---|---|---|
| 1 | C | Acetone 1 mol | 0.43 mol | 2.5 mol | 0.15 mol | - | 15000 |
| 2 | C | Acetone 1 mol | 0.55 mol | 2.46 mol | 0.023 mol | Laevulinic acid 0.045 mol | 16000 |
| 3 | C | Acetone 0,36 mol | 0,17 mol | 1 mol | - | Saccarose 0.02 mol | 15000 |
| 4 | C | Acetone 1 mol | 0.51 mol | 2.91 mol | 0.023 mol | Salicylic acid 0.068 mol | 16400 |
| 5 | C | Cyclohexanone 0,51 mol | 0,25 | 1,5 mol | - | - | 18000 |
| 6 | C | Acetone 1 mol | 0.51 mol | 3 mol | - | - | 19000 |
| 7 | A | Cyclohexanone 0.51 mol | 0,25mol | 1.5 mol | | | 21000 |
| 8 | A | Cyclohexanone 0,51 | 0,25 | 1.5 mol | | | 19000 |
| 9 | A | Cyclohexanone 0.56 mol | 0,27 | 1.28 mol | | | 28000 |
| 10 | B | Cyclohexanone 0.61 mol | 0.27 mol sodium pyrosulfite | 1.28 mol | | | 26000 |
| 11 | B | Cyclohexanone 0.56 mol | 0.27 mol sodium pyrosulfite | 1.28 mol | | | 25000 |
| 12 | B | Cyclohexanone 0.56 mol | 0.27 mol sodium pyrosulfite | 1.28 mol | | | 22000 |
| 13 | B | Cyclohexanone 0.56 mol | 0.27 mol sodium pyrosulfite | 1.28 mol | | | 34000 |
| 14 | B | Cyclohexanone 0.56 mol | 0.27 mol sodium pyrosulfite | 1.28 mol | | | 20000 |
| 15 | C | Cylcohexanone 0,18 mol and Acetone 0,18 mol | 0,092 mol sodium pyrosulfite | 0,87 mol | | | 23000 |

**Table 2:**

| | **flow / cm** | **initial setting / min:s** |
|---|---|---|
| Comparative test 1.1 | 18.6 | 2:20 |
| Comparative test 1.2 | 18.7 | 2:20 |
| Comparative test 1.3 | 18.3 | 2:20 |
| Test 1.4 | 18.8 | 2:20 |

**Table 3:.**

| | **Dry density / kg·dm⁻³** | **Flexural strength /N·mm⁻²** | **Compressive strength / N·mm⁻²** |
|---|---|---|---|
| Comparative test 1.1 | 0.670 | 1.282 | 3.19 |
| Comparative test 1.2 | 0.662 | 1.258 | 3.08 |
| Comparative test 1.3 | 0.666 | 1.303 | 3.23 |
| Test 1.4 | 0.667 | 1.453 | 3.43 |

**Table 4:**

| name | type of dispersant | amount of dispersant | water/stucco ratio weight% |
|---|---|---|---|
| 3.1 | none | 0% | 0.81 |
| 3.2 | BNS | 0.1% | 0.845 |
| 3.3 | BNS | 0.3% | 0.73 |
| 3.4 | No. 8 | 0.1% | 0.76 |
| 3.5 | No. 8 | 0.3% | 0.73 |

**Table 5:**

| | stucco | dispersant | flow / cm | initial setting / min:s |
|---|---|---|---|---|
| Comparative test 6.1 | A | - | 18.7 | 2:20 |
| Comparative test 6.2 | B | - | 18.4 | 2:15 |
| Comparative test 6.3 | A | PCE | 18.8 | 2:15 |
| Comparative test 6.4 | A | No. 8 | 18.4 | 2:20 |
| Comparative test 6.5 | B | PCE | 14.0 | 2:10 |
| Test 6.6 | B | No. 8 | 19.1 | 2:20 |

### Examples

### Ketone resins

A) 40 g of water was introduced to the reaction mixture. The desired amount of 30 % Formaldehyde solution was mixed with the necessary equivalent of Sodium Sulfite or alternatively sodium pyrosulfite. The pH was adjusted with 50% Sodium Hydroxide to pH = 13.5. After cooling to room temperature the amount of cyclohexanone as depicted in Table 1 was added to the solution. The viscous mixture was heated to reflux for 3 hours. After cooling to room temperature, formic acid was used to adjust the pH to 10. The molecular weight was analyzed with gel permeation chromatography (GPC) and viscosimetry. GPC was measured in water, calibrated with polyethylene glycol. Residual formaldehyde content was <10 ppm.
B) 40 g of water was introduced to the reaction mixture. The desired amount of 30 % formaldehyde solution was mixed with the necessary equivalent of Sodium Sulfite or alternatively sodium pyrosulfite and the amount of cyclohexanone as depicted in Table 1. The pH was adjusted with 50% Sodium hydroxide to pH = 13.5. The viscous mixture was heated to reflux for 3 hours. After cooling to room temperature, formic acid was used to adjust the pH to 10. The molecular weight was analyzed with GPC and viscosimetry. Residual formaldehyde content was <10 ppm.
C) 40 g of water was introduced to the reaction mixture. The pH was adjusted to 10 followed by the addition of 0.43 equivalents of Sodium sulfite and dropwise addition of 1 equivalent of Acetone. The mixture was stirred thoroughly. During this procedure, the temperature rose to 30-32°C. The solution was further heated to 56°C. 2.5 equivalents of Formaldehyde was slowly added, drop wise, so that the temperature did not exceed 70°C. After complete addition, the temperature was raised to 90°C and the mixture heated for additional 3-5 hours until the desired molecular weight has been reached. The molecular weight was analyzed with GPC and viscosimetry. Residual formaldehyde content was <10 ppm.

### Gypsum slurries

### Example 1

### Foam based on fatty alkyl sulfate was produced in the following way:

A tenside solution, containing 0.3% of sodium decylsulfate, was filled in a supply tank and routed to a foam generator. By use of a stator rotor system, and by addition of compressed air, the tenside solution was transferred into foam. The adjusted foam density was 75 g/L.

### Estimation of initial setting:

Initial setting was determined with the so-called knife-cut method (analogous to DIN EN 13279-2)

### Estimation of flow:

Flow was determined after a time of 60 seconds. After adding powder components to liquid the stucco had to soak for 15 seconds. Then the slurry was mixed for 30 seconds with a Hobart mixer. After a total time of 45 seconds a cylinder was filled with the stucco slurry up to the top edge and lifted after 60 seconds. At the end the patty diameter was measured with a caliper rule on two perpendicular axes.

### Comparative test 1.1:

A mixture of 500 g stucco (β-hemihydrate from natural source) and 0.41 g accelerator (fine milled dehydrate from ball mill to adjust a setting time of about 2:20 min) was interspersed in 365.05 g water. Then the powder had to soak in liquid for 15 seconds. Afterwards the slurry was mixed with the Hobart mixer at level II (285 rpm) for 30 seconds. Meanwhile 25.03 g of the fatty alkylsulfate-based foam, having a density of 75 g/L, was added to the slurry to adjust a gypsum slurry with a dry density of 665 +/- 5 kg/m³. The flow was 18.5 +/- 0.3 cm.

### Comparative test 1.2:

2.5 g of dispersant Melflux® PCE 1493 L (BASF; 40% active means 0.2% active (PCE) related to stucco), 500 g stucco (β-hemihydrate from natural source) and 0.48 g accelerator (fine milled dehydrate from ball mill to adjust a setting time of about 2:20 min:s) was interspersed in 376.15 g water. Then the powder had to soak in liquid for 15 seconds. Afterwards the slurry was mixed with the Hobart mixer at level II (285 rpm) for 30 seconds. Meanwhile 27.43 g of the fatty alkylsulfate-based foam, having a density of 75 g/L, was added to the slurry to adjust a gypsum slurry again with a dry density of 665 +/- 5 kg/m³ and a flow of 18.5 +/- 0.3 cm.

### Comparative test 1.3:

2.857 g of dispersant Melcret® 600 L (BASF; 35% active means 0.2% active (BNS) related to stucco), 500 g stucco (β-hemihydrate from natural source) and 0.46 g accelerator (fine milled dehydrate from ball mill to adjust a setting time of about 2:20 min:s) was interspersed in 351.13 g water. Then the powder had to soak in liquid for 15 seconds. Afterwards the slurry was mixed with the Hobart mixer at level II (285 rpm) for 30 seconds. Meanwhile 29.60 g of the fatty alkylsulfate-based foam, having a density of 75 g/L, was added to the slurry to adjust a gypsum slurry again with a dry density of 665 +/- 5 kg/m³ and a flow of 18.5 +/- 0.3 cm.

Test 1.4:

3.390 g of dispersant No. 8 subject to invention (29.5% active; means 0.2% active related to stucco), 500 g stucco (β-hemihydrate from natural source) and 0.46 g accelerator (fine milled dehydrate from ball mill to adjust a setting time of about 2:20 min:s) was interspersed in 327,83 g water. Then the powder had to soak in liquid for 15 seconds. Afterwards the slurry was mixed with the Hobart mixer at level II (285 rpm) for 30 seconds. Meanwhile 23,85 g of the fatty alkylsulfate-based foam, having a density of 75 g/L, was added to the slurry to adjust a gypsum slurry again with a dry density of 665 +/- 5 kg/m³ and a flow of 18.5 +/- 0.3 cm.

In all comparative tests (1.1, 1.2 and 1.3) as well as in test 1.4 flow and setting was determined after 60 seconds of mixing (Table 1). Moreover test specimens (4x4x16 cm³ prism) were prepared according to DIN 196-1 for investigation on strength development. Before testing flexural (see Table 2) and compressive strength (see Table 2) all samples were dried until mass consistency in the following way. After setting of the gypsum slurry all test specimens were stored at 20 °C / 65 % relative humidity for one day. Afterwards all samples were stripped of the forms and then dried at 40 °C until mass consistency. Dry density (δ_{T}) was calculated by weighing and by volume (256 cm³).

Example 1 shows that at same adjusted densities, flows and setting times, by addition of ketone resin dispersant subject to invention, higher strength values are achievable. At a dispersant dosage of 0.2 % active by weight of stucco, it was possible to improve flexural as well as compressive strength by 5-10 % in relation to reference mixtures, which were established without dispersant, with BNS or PCE.

### Example 2

Adjustment of pore structure with dispersant No. 8 subject to invention and different foaming aids

### Mixture 2.1

A tenside solution, containing 0.3% of Vinapor® GYP 3110, a foaming agent for coalescencing foam (BASF) was filled in a supply tank and routed to a foam generator. By use of a stator rotor system, and by addition of compressed air, the tenside solution was transferred into foam. The adjusted foam density was 75 g/L.

3.390 g of dispersant No. 8 subject to invention (29.5% active; means 0.2% active related to stucco;), 500 g stucco (β-hemihydrate from natural source) and 0.46 g accelerator (fine milled dehydrate from ball mill to adjust a setting time of about 2:20 min:s) was interspersed in 337,37 g water. Then the powder had to soak in liquid for 15 seconds. Afterwards the slurry was mixed with the Hobart mixer at level II (285 rpm) for 30 seconds. Meanwhile 19,53 g of the alkyl sulfate-based foam, having a density of 75 g/L, was added to the slurry to adjust a gypsum slurry with a dry density of 665 +/- 5 kg/m³ and a flow of 18.5 +/- 0.3 cm. After setting a foam test specimen was broken to evaluate pore structure.

### Mixture 2.2

A tenside solution, containing 0.3% of Vinapor® GYP 2610, a foaming agent for stable foam (BASF), was filled in a supply tank and routed to a foam generator. By use of a stator rotor system, and by addition of compressed air, the tenside solution was transferred into foam. The adjusted foam density was 75 g/L.

Same procedure as for mixture 2.1 was repeated with 3.390 g of dispersant No. 8 subject to invention (29.5% active; means 0.2% active related to stucco;), 500 g stucco (β-hemihydrate from natural source) and 0.57 g accelerator (fine milled dehydrate from ball mill to adjust a setting time of about 2:20 min:s). All components were interspersed in 352.37 g water. Then the powder had to soak in liquid for 15 seconds. Afterwards the slurry was mixed with the Hobart mixer at level II (285 rpm) for 30 seconds. Meanwhile 19.53 g of the fatty alkyl ether sulfate-based foam, having a density of 75 g/L, was added to the slurry to adjust the gypsum slurry again with a dry density of 665 +/- 5 kg/m³ and a flow of 18.5 +/- 0.3 cm. After setting a foamed test specimen was broken to evaluate pore structure.

Example 2 shows, that independent of type of foaming agent, same density, flow and setting time is adjustable with dispersants subject to invention.

### Example 3

Robustness of pore structure with dispersant No. 8 subject to invention in comparison to BNS

Analogues to example 1 and 2 five different mixtures were adjusted at a dry density of 665 +/- 5 kg/m³, a flow of 18.5 +/- 0.3 cm and an initial setting of 2:00 min:s to 2:20 min:s. After setting a foamed test specimen was broken to evaluate pore structure. The tenside solution (0.3% Vinapor® GYP 3110, was prepared with the stator rotor system and had an adjusted foam density of 75 g/L.

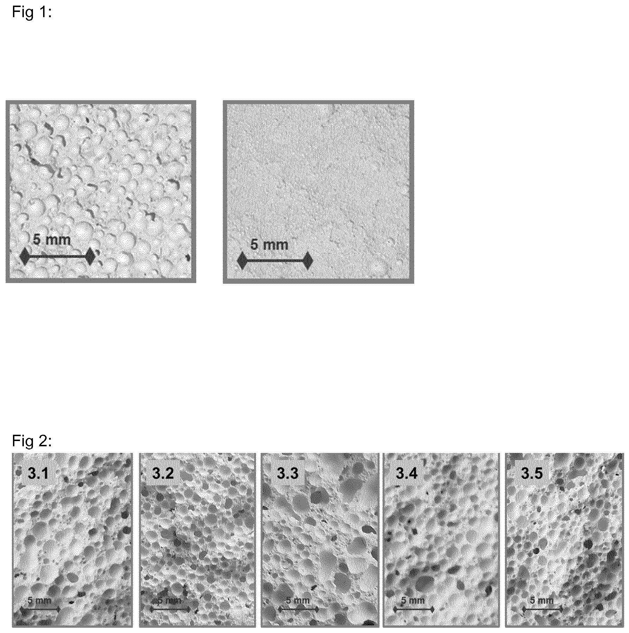

Figure 2 shows that by use of 0.1% of BNS (3.2) the pores become little finer in comparison to reference mixture (3.1) without dispersant. Adding 0.3% of BNS to the slurry (3.3) leads to little coarser pores. Addition of 0.1% (3.4) or 0.3% (3.5) of dispersant No. 8 subject to invention ends in similar pores like reference system. This indicates high robustness to foaming aids.

### Example 4

### Dosage efficiency of dispersant No. 8 subject to invention in comparison to state of the art technologies.

Analogues to example 1,2 and 3 different mixtures were adjusted at a dry density of 665 +/- 5 kg/m³, a flow of 18.5 +/- 0.3 cm and an initial setting of 2:00 min:s to 2:20 min:s. The tenside solution (0.3% Vinapor GYP 3110; BASF), which was used for all systems, was again prepared with the stator rotor system and had an adjusted foam density of 75 g/L. Dosage curves for beta naphthalene sulphonate, BNS (Melcret® 600 L; BASF), poly carboxylic ether (Melflux® PCE 541 L; BASF) and dispersant No. 8 subject to invention were done. Results are shown in the diagram below.

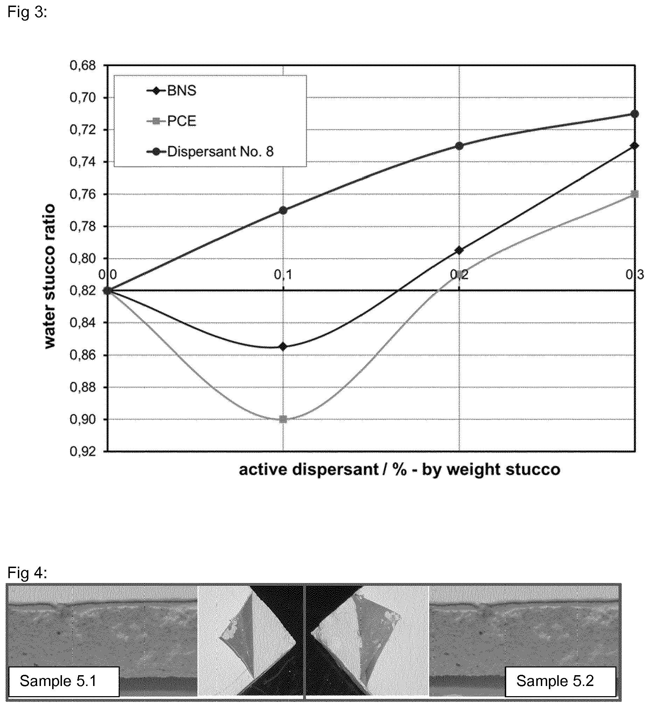

Fig. 3 shows the thickening effect for BNS and PCE dispersants at low dosages. At 0.1% of BNS and PCE is necessary to use more water (water stucco ratio is 0.855 and 0.90) than for the reference mixture without dispersant (water stucco ratio is 0.82) to achieve same flow at same setting time and density. Not before a dosage of more than 0.16% of BNS and 0.18% of PCE it is possible to reduce water demand of stucco by addition of these dispersants. By use of dispersant No. 8 subject to invention it is possible to reduce water stucco ratio from the very beginning without any thickening.

### Example 5

### Gypsum plasterboards

For preparation of small plasterboard samples two different mixtures were prepared. On one hand sample 5.1 (with Melcret® 600 L; BASF) and on the other hand sample 5.2 (with dispersant 7 subject of invention).

For sample 5.1 3.43 g of dispersant Melcret® 600 L (BASF; 35% active means 0.2% active (BNS) related to stucco), 600 g stucco (β-hemihydrate from FGD) and 0.40 g accelerator (fine milled dehydrate from ball mill to adjust a setting time of about 2:20 min:s) was interspersed in 418.26 g water. Then the powder had to soak in liquid for 15 seconds. Afterwards the slurry was mixed with the Hobart mixer at level II (285 rpm) for 30 seconds. Meanwhile 29.51 g of the fatty alkyl ether sulfate-based foam (Vinapor® GYP 2610; BASF), having a density of 75 g/L, was added to the slurry to adjust a gypsum slurry with a dry density of 665 +/- 5 kg/m³ and a flow of 18.0 +/- 0.3 cm.

For sample 5.2 5.43 g of dispersant No. 7 subject of invention (22.1% active means 0.2% active related to stucco), 600 g stucco (β-hemihydrate from FGD) and 0.15 g accelerator (fine milled dehydrate from ball mill to adjust a setting time of about 2:20 min:s) was interspersed in 416.26 g water. Then the powder had to soak in liquid for 15 seconds. Afterwards the slurry was mixed with the Hobart mixer at level II (285 rpm) for 30 seconds. Meanwhile 29.51 g of the fatty alkyl ether sulfate-based foam (Vinapor® GYP 2610; BASF), having a density of 75 g/L, was added to the slurry to adjust a gypsum slurry with a dry density of 665 +/- 5 kg/m³ and a flow of 18.0 +/-0.3 cm.

Both sample mixtures were in each case poured in a mold, which was already prepared with a paper on the bottom. After equilibrium of the stucco slurry the top paper was placed on the stucco surface to get a similar construction like a board - bottom paper, foamed stucco and top paper. Parts of the board samples are shown in Fig. 4.

### Example 6:

### Clay robustness

Clay robustness of the inventive dispersants was demonstrated with two binder preparations: Stucco A, pure clay-free β-hemihydrate from FGD, and clay-containing stucco B. Stucco B was obtained by loading clay-free FGD stucco with clay by substitution of 1 mass-% stucco with 1% Bentonite.

### Comparative test 6.1

As a reference a mixture of 600 g of stucco A and 0.16 g accelerator (fine milled dehydrate from ball mill to adjust a setting time of 2:00 min:s to 2:20 min:s) was interspersed in 453.57 g water and the powder was allowed to soak in liquid for 15 seconds. Afterwards the slurry was mixed with the Hobart mixer at level II (285 rpm) for 30 seconds. Meanwhile 20.43 g of the fatty alkyl ether sulfate-based foam (Vinapor GYP 2610; BASF), having a density of 75 g/L, was added to the slurry to adjust a gypsum slurry with a dry density of 680 +/- 5 kg/m³.

### Comparative test 6.2

The same procedure as for comparative test 6.1 with stucco B instead of stucco A. The determined setting times and the corresponding flow is shown in table 5.

### Comparative test 6.3

0.750 g of dispersant Melflux® PCE 1493 L (BASF; 40% active means 0.05% active related to stucco), 600 g stucco A and 0.20 g accelerator (fine milled dehydrate from ball mill to adjust a setting time of 2:00 min:s to 2:20 min:s) were interspersed in 423.12 g water and the powder allowed to soak in liquid for 15 seconds. Afterwards the slurry was mixed with the Hobart mixer at level II (285 rpm) for 30 seconds. Meanwhile 20.43 g of the fatty alkyl ether sulfate-based foam (Vinapor GYP 2610; BASF), having a density of 75 g/L, was added to the slurry to adjust a gypsum slurry with a dry density of 680 +/- 5 kg/m³.

### Comparative test 6.4

2.034 g of inventive dispersant No. 8 (29.5% active means 0.10% active related to stucco), 600 g stucco A and 0.20 g accelerator (fine milled dehydrate from ball mill to adjust a setting time of 2:00 min:s to 2:20 min:s) were interspersed in 422.13 g water and the powder allowed to soak in liquid for 15 seconds. Afterwards the slurry was mixed with the Hobart mixer at level II (285 rpm) for 30 seconds. Meanwhile 20.43 g of the fatty alkyl ether sulfate-based foam (Vinapor GYP 2610; BASF), having a density of 75 g/L, was added to the slurry to adjust a gypsum slurry with a dry density of 680 +/- 5 kg/m³.

### Comparative test 6.5

Same procedure as for comparative test 6.3, with stucco B instead of stucco A.

### Test 6.6

Same procedure as for comparative test 6.4, with stucco B instead of stucco A.

Clay robustness of the the inventive dispersants is shown in table 5. Stucco A and stucco B (comparative test 6.1 and 6.2) have similar Flow and setting behavior when no dispersant is used. Under clay-free conditions it is possible to adjust conventional dispersant PCE and inventive dispersant No. 8 to the same water stucco ratios resulting in same flow and initial setting time (comparative tests 6.3 and 6.4).

To the contrary, in the presence of clay, i.e. by use of stucco B, the situation is different. Comparative test 6.5, formulated with PCE dispersant, a strong thickening effect is observed with a significant of slump of more than 4 cm. The inventive dispersant No. 8 on the other hand demonstrates ability to retain flow and initial setting time in the presence of clay (Test 6.6).

## Claims

1. A gypsum containing slurry comprising foam and a ketone resin wherein the ketone resin is:
a cyclohexanone / formaldehyde / sulfite condensation product and wherein the gypsum comprises clay, further **characterized in that** the ketone resin is selected from sizes with molecular weights from 10 000 - 50 000 g/mol.

2. A gypsum containing slurry of claim 1, wherein the monomer ratio I / II / III is 1 / 2 - 3 / 0.33 to 1.

3. A gypsum containing slurry of any of claims 1 - 2 wherein the ketone resin is present in an amount from 0.01 - 1 weight-%, preferably 0.025 - 0.5 weight-%, most preferred 0.05 - 0.3 weight-% of the solid condensation product, based on the weight of gypsum.

4. A gypsum containing slurry according to any of the claims 1 - 3 wherein the ketone resin is in the form of a 15 - 60 weight %, preferably 25 -50 weight % aqueous solution.

5. A gypsum containing slurry of any of claims 1 - 4 wherein the foam is generated from an aqueous surfactant solution comprising a linear or branched fatty alkyl sulfate, linear or branched fatty alkyl ether sulfate, hydrotrope or a mixture thereof.

6. A gypsum containing slurry of claims 1 - 5 wherein the gypsum further comprises a swellable clay.

7. A wallboard comprised of a set gypsum containing slurry according to claims 1 - 6.

8. A gypsum wallboard of claim 7 with dry weight density of 0.45 - 1.0 kg/m³, preferably 0.50 - 0.80 kg/m³.

9. A gypsum wallboard of claim 8 wherein the set gypsum core comprises a ketone resin.

10. A gypsum wallboard of any of claims 7 - 9 wherein the set gypsum core comprises the ketone resin in the range of 0.01 - 0.5 weight-%, preferably 0.05 - 0.3 weight-% of the solid condensation product, based on the weight of gypsum.

11. A method of making a gypsum wallboard of any of claims 7 - 10 comprising the steps of:
- preparing foam from surfactant;
- preparing an aqueous slurry of gypsum containing ketone resin in the range from 0.01 - 1.0 weight-%, based on the weight of gypsum;
- mixing the foam into the aqueous slurry of gypsum containing ketone resin;
- sandwiching the slurry between cover sheets to form wallboard;
- cutting the gypsum wallboard after the gypsum slurry has sufficiently hardened;
- drying the gypsum wallboard.

12. Method of claim 11 wherein the cover sheets are paper.

## Patentansprüche

1. Gipshaltige Aufschlämmung, die Schaum und ein Ketonharz umfasst, wobei das Ketonharz ist:
ein Cyclohexanon/Formaldehyd/Sulfit-Kondensationsprodukt, und wobei der Gips Ton umfasst, ferner **dadurch gekennzeichnet, dass** das Ketonharz ausgewählt ist aus Größen mit Molekulargewichten von 10.000 bis 50.000 g/mol.

2. Gipshaltige Aufschlämmung gemäß Anspruch 1, wobei das Monomerverhältnis I/II/III 1/2-3/0,33 bis 1 beträgt.

3. Gipshaltige Aufschlämmung gemäß einem der Ansprüche 1-2, wobei das Ketonharz in einer Menge von 0,01-1 Gew.-%, vorzugsweise 0,025-0,5 Gew.-%, höchst bevorzugt 0,05-0,3 Gew.-%, an dem festen Kondensationsprodukt, bezogen auf das Gewicht von Gips, vorhanden ist.

4. Gipshaltige Aufschlämmung gemäß einem der Ansprüche 1-3, wobei das Ketonharz in der Form einer wässrigen Lösung von 15-60 Gew.-%, vorzugsweise 25-50 Gew.-%, vorliegt.

5. Gipshaltige Aufschlämmung gemäß einem der Ansprüche 1-4, wobei der Schaum aus einer wässrigen Tensidlösung erzeugt ist, die ein lineares oder verzweigtes Fettalkylderivat, lineares oder verzweigtes Fettalkylethersulfat, Hydrotrop oder Gemisch davon umfasst.

6. Gipshaltige Aufschlämmung gemäß Ansprüchen 1-5, wobei der Gips ferner einen quellbaren Ton umfasst.

7. Wandplatte, umfassend eine abgebundene gipshaltige Aufschlämmung gemäß Ansprüchen 1-6.

8. Gips-Wandplatte gemäß Anspruch 7 mit einer Trockengewichtdichte von 0,45-1,0 kg/m³, vorzugsweise 0,50-0,80 kg/m³.

9. Gips-Wandplatte gemäß Anspruch 8, wobei der abgebundene Gipskern ein Ketonharz umfasst.

10. Gips-Wandplatte gemäß einem der Ansprüche 7-9, wobei der abgebundene Gipskern das Ketonharz in dem Bereich von 0,01-0,5 Gew.-%, vorzugsweise 0,05-0,3 Gew.-%, an dem festen Kondensationsprodukt, bezogen auf das Gewicht von Gips, umfasst.

11. Verfahren zur Herstellung einer Gips-Wandplatte gemäß einem der Ansprüche 7-10, umfassend die Schritte:
- Herstellen von Schaum aus Tensid;
- Herstellen einer wässrigen Aufschlämmung von Gips, die Ketonharz in dem Bereich von 0,01-1 Gew.-%, bezogen auf das Gewicht von Gips, enthält;
- Mischen des Schaums in die wässrige Aufschlämmung von Gips, die Ketonharz enthält;
- sandwichartiges Einschließen der Aufschlämmung zwischen Decklagen, um eine Wandplatte zu bilden;
- Schneiden der Gips-Wandplatte, nachdem die Gipsaufschlämmung ausreichend ausgehärtet ist;
- Trocknen der Gips-Wandplatte.

12. Verfahren gemäß Anspruch 11, wobei die Decklagen Papier sind.

## Revendications

1. Pâte contenant du plâtre comprenant de la mousse et une résine cétonique dans laquelle la résine cétonique est : un produit de condensation de cyclohexanone/formaldéhyde/sulfite et dans laquelle le plâtre comprend de l'argile, **caractérisée en outre en ce que** la résine cétonique est choisie parmi les tailles ayant des masses moléculaires de 10 000-50 000 g/mol.

2. Pâte contenant du plâtre selon la revendication 1, dans laquelle le rapport des monomères I/II/III est de 1/2-3/0,33 à 1.

3. Pâte contenant du plâtre selon l'une quelconque des revendications 1-2 dans laquelle la résine cétonique est présente en une quantité de 0,01-1 % en poids, de préférence de 0,025-0,5 % en poids, le plus préférablement de 0,05-0,3 % en poids du produit de condensation solide, par rapport au poids de plâtre.

4. Pâte contenant du plâtre selon l'une quelconque des revendications 1-3 dans laquelle la résine cétonique est sous la forme d'une solution aqueuse à 15-60 % en poids, de préférence 25-50 % en poids.

5. Pâte contenant du plâtre selon l'une quelconque des revendications 1-4 dans laquelle la mousse est produite à partir d'une solution aqueuse de tensioactif comprenant un (alkyl gras linéaire ou ramifié)sulfate, un (éther d'alkyle gras linéaire ou ramifié)sulfate, un hydrotrope ou un mélange de ceux-ci.

6. Pâte contenant du plâtre selon les revendications 1-5 dans laquelle le plâtre comprend en outre une argile pouvant gonfler.

7. Plaque murale constituée d'une pâte contenant du plâtre selon les revendications 1-6 durcie.

8. Plaque de plâtre murale selon la revendication 7 présentant une masse volumique à l'état sec de 0,45-1,0 kg/m³, de préférence de 0,50-0,80 kg/m³.

9. Plaque de plâtre murale selon la revendication 8 dans laquelle l'âme en plâtre durci comprend une résine cétonique.

10. Plaque de plâtre murale selon l'une quelconque des revendications 7-9 dans laquelle l'âme en plâtre durci comprend la résine cétonique dans la plage de 0,01-0,5 % en poids, de préférence de 0,05-0,3 % en poids du produit de condensation solide, par rapport au poids de plâtre.

11. Procédé de fabrication d'un plaque de plâtre murale selon l'une quelconque des revendications 7-10 comprenant les étapes consistant à :
- préparer de la mousse à partir d'un tensioactif ;
- préparer une pâte aqueuse de plâtre contenant une résine cétonique dans la plage de 0,01-1,0 % en poids, par rapport au poids de plâtre ;
- mélanger la mousse dans la pâte aqueuse de plâtre contenant la résine cétonique ;
- prendre la pâte en sandwich entre des feuilles de parement pour former une plaque murale ;
- couper la plaque de plâtre murale après que la pâte de plâtre a suffisamment durci ;
- sécher la plaque de plâtre murale.

12. Procédé selon la revendication 11 dans lequel les feuilles de parement sont du papier.
